# EUROPÄISCHE PATENTANMELDUNG

(11) **EP 4 625 606 A1**
(43) Veröffentlichungstag der Anmeldung: **01.10.2025**
(21) Anmeldenummer: 24166283.2
(22) Anmeldetag: 26.03.2024
(51) Int. Cl.: H01M 10/44

(54) **REGELUNG EINES FORMIERUNGSPROZESSES EINER BATTERIEZELLE**

(71) Anmelder: Siemens Aktiengesellschaft, 80333 München (DE)
(72) Erfinder: Fischer, Michael, 91320 Ebermannstadt (DE); Katzer, Felix, 90763 Fürth (DE); Radinger, Hannes, 90459 Nürnberg (DE)
(74) Vertreter: Siemens Patent Attorneys

(57) **Zusammenfassung**

Es wird ein Verfahren zur Regelung eines Formierungsprozesses einer Batteriezelle (1) vorgeschlagen, bei dem an die Batteriezelle (1) eine zeitabhängige Spannung V angelegt wird, und das durch folgende Schritte gekennzeichnet ist:
- (S1) Bereitstellen einer spannungsabhängigen Soll-Ausdehnung *D*₀(*V*) (42);
- (S2) Erfassen einer aktuellen Ausdehnung *D*(*V*) (41) der Batteriezelle (1); und
- (S3) Regeln der Spannung V des Formierungsprozesses derart, dass die Abweichung zwischen der erfassten aktuellen Ausdehnung *D*(*V*) (41) und der Soll-Ausdehnung *D*₀(*V*) (42) verringert wird.

Weiterhin betrifft die Erfindung ein Herstellungsverfahren einer Batteriezelle (1) sowie eine Vorrichtung zur Regelung eines Formierungsprozesses einer Batteriezelle (1).

## Beschreibung

Die Erfindung betrifft ein Verfahren gemäß dem Oberbegriff des Patentanspruches 1, ein Herstellungsverfahren gemäß dem Oberbegriff des Patentanspruches 8 sowie eine Vorrichtung gemäß dem Oberbegriff des Patentanspruches 9.

Eine Formierung einer Batteriezelle ist einer der letzten Produktionsschritte in der Zellproduktion. Typischerweise erfolgt dieser Formierungsprozess, nachdem die Zelle mit dem Elektrolyten befüllt wurde und bevor die Batteriezelle eingelagert und eine End-of-Line Qualitätskontrolle durchgeführt wird.

Der Formierungsprozess umfasst die ersten Lade- beziehungsweise Entladevorgänge der fertigen Batteriezelle und soll einen definierten und für die spätere Verwendung möglichst optimalen Ausgangszustand sicherstellen. Bei Lithium-Ionen-Zellen und verwandten Technologien wird durch die Formierung die Bildung einer wohldefinierten Feststoff-Elektrolyt-Grenzphase oder Festelektrolyt-Interphase (englisch: Solid Electrolyte Interphase; abgekürzt SEI) an der Oberfläche der Anode angestrebt. Diese bildet sich durch Reaktionen des Elektrolyten und Elektrolyt-Additiven in bestimmten Spannungs- und gegebenenfalls Temperaturbereichen, die während der Entlade- beziehungsweise Ladevorgänge während des Formierungsprozesses durchlaufen werden.

Innerhalb einer Batteriezelle treten mehrere komplexe Reaktionen simultan auf, die sich in ihrer Reaktionskinetik voneinander unterscheiden. Hierbei ist jede elektrochemische Reaktion, insbesondere die Reaktionen, die zur SEI Formierung beitragen, abhängig vom Potential am Ort der Reaktion.

Somit kann es bei falsch eingestelltem zeitlichen Verlauf der vorgegebenen Stromstärke oder der angelegten Spannung dazu kommen, dass sich Potentiale an den Grenzflächen einstellen, die nicht für die Bildung der möglichst optimalen SEI geeignet sind, oder dass bereits weitere Reaktionen, beispielsweise ein Aufladen der Elektrodenmaterialien, beschleunigt stattfinden, die ihrerseits die SEI Formierung negativ beeinflussen. Es ist somit erforderlich, dass der Formierungsprozess geeignete Strom-, Spannungs- und/oder Temperaturverläufe zur Bildung der gewünschten SEI verwendet.

Weiterhin ist die Formierung einer der Zeit- und Energie-intensivsten Prozesse in der Zellproduktion, sodass die diese möglichst effizient sein müssen.

Die genannten technischen Anforderungen sowie die komplexen zugrundeliegenden chemischen Reaktionen stellen hohe Ansprüche an die Definition und Kontrolle der Prozessparameter während des Formierungsprozesses.

Bekannte Formierungsprozesse verwenden Stromstärken und gegebenenfalls Spannungs- und Temperaturverläufe basierend auf empirischen Tests an den produzierten Zellen beziehungsweise Batteriezellen. Dabei werden die Prozessparameter derart eingestellt, dass sie einen möglichst guten Kompromiss aus Performance und Prozesskosten darstellen. Falls Messungen zur Kontrolle des Formierungsprozesses verwendet werden, beschränken sich diese auf Strom- und Spannungsmessungen. Beispielsweise wird so lange zyklisiert, bis die gemessene differentielle Kapazität unter einen bestimmten Schwellenwert fällt. Dieses Verfahren erfordert eine möglichst genaue Kenntnis der verfügbaren Prozessfenster und kann dennoch die Streuungen in der Qualität der produzierten Zellen nicht vollständig reduzieren.

Neuere Verfahren zielen darauf ab, die Überspannung während der Formierung zu messen. Dies kann durch die Verwendung von Strompulsen oder Impedanzmessungen erfolgen. Durch eine komplexe Auswertungen der gemessenen Überspannung lässt sich der Formierungsprozess beschleunigen oder verlangsamen, um eine zuverlässigere SEI-Bildung sicherzustellen.

Der vorliegenden Erfindung liegt die Aufgabe zugrunde, ein verbessertes Verfahren für einen Formierungsprozess einer Batteriezelle bereitzustellen.

Die Aufgabe wird durch ein Verfahren mit den Merkmalen des unabhängigen Patentanspruches 1, durch ein Herstellungsverfahren mit den Merkmalen des unabhängigen Patentanspruches 8 sowie durch eine Vorrichtung mit den Merkmalen des unabhängigen Patentanspruches 9 gelöst. In den abhängigen Patentansprüchen sind vorteilhafte Ausgestaltungen und Weiterbildungen der Erfindung angegeben.

Bei dem erfindungsgemäßen Verfahren zur Regelung (Regelungsverfahren) eines Formierungsprozesses einer Batteriezelle wird an die Batteriezelle eine zeitabhängige Spannung V angelegt. Das erfindungsgemäße Verfahren ist gekennzeichnet durch folgende Schritte:
- Bereitstellen einer spannungsabhängigen Soll-Ausdehnung *D*₀(*V*);
- Erfassen einer aktuellen Ausdehnung *D(V)* der Batteriezelle; und
- Regeln der Spannung V des Formierungsprozesses derart, dass die Abweichung zwischen der erfassten aktuellen Ausdehnung *D(V)* und der Soll-Ausdehnung *D*₀(*V*) verringert wird.

Grundsätzlich sind die genannten Größen, insbesondere Spannungen, Stromstärken, Temperaturen und/oder Ausdehnungen während des Formierungsprozesses zeitabhängig.

Die Ausdehnung der Batteriezelle kann jede Änderung einer eindimensionalen, zweidimensionalen und/oder dreidimensionalen räumlichen Größe der Batteriezelle sein, insbesondere eine Länge, Breite und/oder Höhe und/oder eine Fläche und/oder ein Volumen der Batteriezelle. Auch ein Verwenden von relativen Größen, wie beispielsweise *D*(*V*)/*D*₀(*V*), als Ausdehnung oder als Abweichung ist denkbar.

Erfindungsgemäß wird für das Regeln der Spannung des Formierungsprozesses beziehungsweise der Formierung der Batteriezelle deren Ausdehnung herangezogen. Es erfolgt somit eine ausdehnungsbasierte Regelung des Formierungsprozesses. Hierzu wird wenigstens eine aktuelle Ausdehnung der Batteriezelle erfasst und mit einer bereitgestellten Soll-Ausdehnung im Rahmen der Regelung verglichen. Die Regelung ist derart ausgebildet, dass die Abweichung zwischen der Soll-Ausdehnung und der aktuell erfassten Ausdehnung verringert, insbesondere bestmöglich minimiert wird. Hierzu kann beispielsweise der Betrag der Regeldifferenz *D*₀(*V*) - *D(V)* als Maß für die Abweichung beziehungsweise als Abweichung verwendet werden. Mit anderen Worten ist *D*₀(*V*) - *D(V)* die Regeldifferenz. Weiterhin ist die Stellgröße der Regelung die erfasste Spannung V.

Die Erfindung verwendet somit die Ausdehnung der Batteriezelle beziehungsweise die Zellausdehnung zur effizienteren Regelung des Formierungsprozesses. Dadurch kann eine verbesserte Qualität der SEI (englisch: Solid Electrolyte Interphase; SEI) sichergestellt werden. Hierbei macht sich die Erfindung zunutze, dass sich die Ausdehnung der Batteriezelle während ihrer Herstellung und insbesondere während des Formierungsprozesses aufgrund einer Umlagerung von Ladungsträgern zwischen den positiven und negativen Elektroden der Zelle und/oder aufgrund von weiteren Reaktionen und/oder Nebenreaktionen ändert. Die Formierung der SEI führt ebenfalls zu einer messbaren beziehungsweise erfassbaren Ausdehnung der Batteriezelle, die vorliegend zur Regelung des Formierungsprozesses und somit zur Regelung der SEI Formierung herangezogen wird.

Gemäß der Erfindung wird somit im Gegensatz zum Stand der Technik nicht nur auf Spannungen, Stromstärken und Temperaturen als Regelgrößen abgestellt, sondern alternativ oder zusätzlich die Ausdehnung der Batteriezelle verwendet. Ein besonderer Vorteil der Verwendung der Ausdehnung ist, dass diese im Gegensatz zu den weiteren genannten Messgrößen im direkten physikalischen Zusammenhang mit der während des Formierungsprozesses gebildeten SEI steht. Es ist somit eine Erkenntnis der Erfindung, dass die Ausdehnung besonders geeignet als Regelgröße zur Regelung des Formierungsprozesses und somit der Ausbildung/Formierung der SEI ist.

Gemäß der Erfindung wird in einem ersten Schritt die spannungsabhängige Soll-Ausdehnung *D*₀(*V*) bereitgestellt. Diese Soll-Ausdehnung entspricht einem möglichst idealem Verlauf der Ausdehnung der Zelle mit der angelegten Spannung und somit einer idealen Referenzzelle (englisch: Golden Sample). Somit kann die Soll-Ausdehnung vorab durch Tests ermittelt werden, bis ein Verlauf und somit eine Referenzzelle mit einer ausreichenden und gewünschten Performance ermittelt wurde.

Zur Ermittlung der Soll-Ausdehnung können bekannte Verfahren herangezogen werden. Hierbei können weitere Sollgrößen, beispielsweise bezüglich Spannung, Stromstärke und/oder Temperatur ermittelt und für das vorliegende Verfahren bereitgestellt werden. Dadurch kann eine vergleichbare Prozessführung zum Golden Sample sichergestellt werden. Ziel ist es für jede Batteriezelle eine zum Golden Sample vergleichbare SEI zu erreichen. Dies wird durch die vorliegende Erfindung ermöglicht.

Insbesondere verwendet die vorliegende Erfindung nicht den zeitlichen Verlauf der Ausdehnung der Batteriezelle, sondern erfindungsgemäß den spannungsabhängigen Verlauf der Ausdehnung der Batteriezelle. Das hat den besonderen Vorteil, dass Zellen mit inhärent langsameren SEI Wachstum nicht mit höheren Strömen geladen werden müssen, um die langsamere SEI Formierung zu kompensieren. Ein Laden mit höheren Strömen hätte den Nachteil, dass sich Überspannungen aufbauen, die zu einem unerwünschten Verhalten der SEI-Bildung führen. Es ist somit eine weitere Erkenntnis der Erfindung, dass das Verwenden des spannungsabhängigen Verlaufs der Ausdehnung die genannten Nachteile vermeidet.

Die Erfindung ermöglicht einen zellspezifischen Formierungsprozess, der für mehrere Batteriezellen zu einer vergleichbaren, qualitativ ausreichenden und verbesserten SEI führt. Hierbei wird der Prozess beispielsweise beschleunigt, wenn die Ausdehnungsmessung eine schnellere Bildung der gewünschten SEI andeutet, und verlangsamt, wenn der Prozess die Bildung der gewünschten SEI gefährden würde.

Im Vergleich zu Messungen von Überspannungen beziehungsweise Zellwiderständen zur Regelung des Formierungsprozesses bietet die Ausdehnungsmessung einen direkten physikalischen Zusammenhang zur gebildeten SEI und wird daher als Regelgröße für die SEI verwendet. Obwohl die SEI auch einen Einfluss auf den Widerstand der Zelle hat, besteht der gemessene Widerstand aus einer Überlagerung von vielen Prozessen, die von dem genauen Zustand der Zelle während der Formierung abhängen und daher komplexe und von der Zellchemie abhängige Algorithmen erforderlich machen würde, um relevante Aussagen für den Formierungsprozess zu liefern. Zudem würden zusätzliche Prozessschritte im Formierungsprozess erforderlich sein, die eine Messung der Überspannung ermöglichen. Die Ausdehnungsmessung hat keinen solchen zusätzlichen Einfluss auf den Formierungsprozess.

Bei dem erfindungsgemäßen Herstellungsverfahren einer Batteriezelle erfolgt ein Formierungsprozess der Batteriezelle. Das erfindungsgemäße Herstellungsverfahren ist gekennzeichnet dadurch, dass der Formierungsprozess mittels eines Verfahrens gemäß der vorliegenden Erfindung und/oder einer ihrer Ausgestaltungen durchgeführt wird.

Es ergeben sich zum erfindungsgemäßen Regelungsverfahren gleichartige, gleichwertige und gleichwirkende Vorteile und/oder Ausgestaltungen des erfindungsgemäßen Herstellungsverfahrens.

Die erfindungsgemäße Vorrichtung zur Regelung eines Formierungsprozesses einer Batteriezelle ist dadurch gekennzeichnet, dass diese wenigstens eine Regeleinheit umfasst, wobei die Regeleinheit dazu ausgebildet ist, ein Verfahren gemäß der vorliegenden Erfindung und/oder in ihrer Ausgestaltungen durchzuführen.

Es ergeben sich zum erfindungsgemäßen Regelungsverfahren und/oder zum erfindungsgemäßen Herstellungsverfahren gleichartige, gleichwertige und gleichwirkende Vorteile und/oder Ausgestaltungen der erfindungsgemäßen Vorrichtung.

Gemäß einer vorteilhaften Ausgestaltung der Erfindung wird für das Regeln der Spannung V die Regeldifferenz *D*₀(*V*) - *D*(*V*) verwendet.

Mit anderen Worten wird bevorzugt als Abweichung der Betrag der Regeldifferenz *D*₀(*V*) - *D(V)* verwendet. Die Regelung versucht somit den Betrag der Regeldifferenz *D*₀(*V*) - *D(V)* zu verringern. Dadurch folgt die spannungsabhängige Ausdehnung der Batteriezelle der spannungsabhängigen Sollausdehnung. Alternativ könnte eine gewichtete Regeldifferenz *aD*₀(*V*) - *bD*(*V*), mit *a*, *b* festgelegte Parameter, herangezogen werden. Insbesondere kann die Regelung als modellprädikative Regelung ausgebildet sei, die den Betrag oder das Quadrat der Regeldifferenz minimiert.

In einer vorteilhaften Weiterbildung der Erfindung wird für eine Stromstärke ein zeitabhängiger Sollwert *I*₀ bereitgestellt, eine aktuelle Stromstärke *I* erfasst, und für das Regeln die Regeldifferenz *g*₁[*D*₀(*V*) - *D*(*V*)] + *g*₂(*I*₀ - *I*) verwendet, wobei *g*₁,*g*₂ Gewichtungsfaktoren sind.

Mit anderen Worten wird vorteilhafterweise die Stromstärke als zusätzliche Regelgröße herangezogen. Die Soll-Stromstärke *I*₀ wird bereitgestellt und kann, vergleichbar zur Soll-Ausdehnung, vorab mittels eines Golden Samples ermittelt werden. Ebenfalls können die Gewichtungsfaktoren basierend auf dem Golden Sample vorab ermittelt werden. Die Gewichtung ermöglicht vorteilhafterweise ein Abgleichen/Werten der beiden Einflussfaktoren Ausdehnung und Stromstärke. Eine niedrigere Gewichtung der Stromstärke und/oder weiterer Referenzwerte, die analog zur Stromstärke berücksichtigt werden, werden zu einer geringeren Abweichung von der Ausdehnungssollkurve *D*₀(*V*) führen, können allerdings zu einer größeren Abweichung vom Prozessverlauf des Golden Sample führen.

Gemäß einer vorteilhaften Ausgestaltung der Erfindung wird weiterhin eine Temperaturabhängigkeit der Ausdehnung berücksichtigt.

Mit anderen Worten wird bevorzugt eine temperaturabhängige und spannungsabhängige Soll-Ausdehnung *D*₀(*V*,*T*) bereitgestellt und analog *D*₀(*V*) verwendet. Dadurch kann vorteilhafterweise der Formierungsprozess und somit die Ausbildung/Formierung der SEI verbessert werden. Weiterhin können weitere Prozessgrößen *G*₁,..., *G_{N}* anlog gemäß *D*₀(*V*, *G*₁, ..., *G_{N}*) verwendet werden, beispielsweise eine Stromstärke, eine Überspannung, ein Zellwiderstand, eine Temperatur und/oder eine Luftfeuchtigkeit.

In einer vorteilhaften Weiterbildung der Erfindung wird als Ausdehnung eine Änderung einer Höhe, Breite und/oder Länge der Batteriezelle und/oder eines Volumens der Batteriezelle verwendet.

Grundsätzlich kann vorteilhafterweise jede erfassbare beziehungsweise messbare Änderung der Batteriezelle bezüglich ihrer räumlichen Dimensionen als Ausdehnung verwendet werden. Abhängig von der grundsätzlichen räumlichen Dimensionierung der Batteriezelle, beispielsweise flach und rechteckförmig, kann eine der genannten Größen bevorzugt verwendet werden.

Gemäß einer vorteilhaften Ausgestaltung der Erfindung wird die aktuelle Ausdehnung *D(V)* mittels eines Dilatometers, einer Kraftmessung, einer Druckmessung und/oder mittels eines Dehnungsmessstreifens erfasst.

Hierbei erfolgt die Messung der Ausdehnung während des Formierungsprozesses der Batteriezelle. Als Messeinrichtungen zur Messung beziehungsweise zum Erfassen der Ausdehnung werden somit bevorzugt ein Dilatometer, ein Kraftmessgerät, ein Druckmessgerät und/oder Dehnungsmessstreifen, die beispielsweise auf und/oder in der Zelle angeordnet sind, verwendet. Für die Kraftmessung und/oder Druckmessung kann die Zelle mittels einer Einspannvorrichtung eingespannt werden und somit die durch die Ausdehnung der Batteriezelle auf die Einspannvorrichtung ausgeübte Kraft beziehungsweise der auf diese ausgeübte Druck erfasst werden. Die genannten Vorrichtungen weisen insbesondere den Vorteil auf, dass diese innerhalb einer Batteriezellenherstellung mit verhältnismäßigen Aufwand verwendet werden können. Alternativ oder ergänzend kann eine optische und/oder akustische Erfassung der Ausdehnung, insbesondere mittels Ultraschall, erfolgen.

Weiterhin ermöglichen die genannten Messverfahren vorteilhafterweise eine besonders genaue Ermittlung der Ausdehnung. Zudem sind die genannten Messverfahren vorteilhafterweise während des Betriebes der Batteriezelle möglich. Gemäß den genannten Messverfahren kann die Ausdehnung somit direkt oder indirekt ermittelt und somit erfasst werden.

Weiterhin kann die Ausdehnung bevorzugt mittels einer ultraschallbasierten Messung und/oder mittels eines optischen Messverfahrens erfasst werden.

In einer vorteilhaften Weiterbildung der Erfindung ist die Batteriezelle als Lithium-Ionen-Batteriezelle ausgebildet.

Vorteilhafterweise kann die Ausdehnung für Lithium-lonen-Batteriezellen besonders gut erfasst werden und diese steht zudem im direkt physikalischen Zusammenhang mit der Bildung der SEI.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:
- Figur 1: ein Ablaufdiagramm eines Verfahrens zur Regelung eines Formierungsprozesses (Regelverfahren) gemäß einer Ausgestaltung der Erfindung;
- Figur 2: einen exemplarischen Spannungs- und Ausdehnungsverlauf eines Golden Samples und einer weiteren Batteriezelle, ohne und mit ausdehnungsbasierter Regelung;
- Figur 3: ein Diagramm bezüglich des Regelkreises des Regelverfahrens; und
- Figur 4: eine Soll-Ausdehnung sowie einen aktuellen Ausdehnungsverlauf einer Batteriezelle.

Gleichartige, gleichwertige oder gleichwirkende Elemente können in einer der Figuren oder in den Figuren mit denselben Bezugszeichen versehen sein.

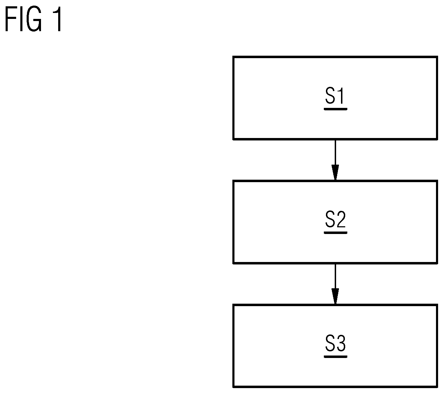

Die Figur 1 zeigt ein Ablaufdiagramm eines Verfahrens zur Regelung (Regelverfahren oder Regelungsverfahren) eines Formierungsprozesses einer Batteriezelle gemäß einer Ausgestaltung der Erfindung. Hierbei wird an die Batteriezelle eine zeitabhängige Spannung V angelegt. Typischerweise erfolgt der Formierungsprozess gemäß mehrerer Phasen, in welchen sich konstante Spannung (CV), konstante Stromstärke (CC) und Ruhephasen (RP) abwechseln.

In einem ersten Schritt S1 des Verfahrens wird eine spannungsabhängige Soll-Ausdehnung *D*₀(*V*) bereitgestellt. Diese Soll-Ausdehnung kann mittels einer Referenzbatteriezelle (Golden Sample) ermittelt werden.

Gemäß einem zweiten Schritt S2 des Verfahrens wird eine aktuelle Ausdehnung *D(V)* der Batteriezelle erfasst beziehungsweise gemessen. Mit anderen Worten weist die Batteriezelle aufgrund der Formierung der SEI eine aktuelle Ausdehnung auf, die von der aktuellen während des Formierungsprozesses an der Batteriezelle angelegten Spannung und/oder dem bisherigen Spannungsverlauf abhängig ist.

In einem dritten Schritt S3 des Verfahrens wird die Spannung V innerhalb des Formierungsprozesses geregelt. Hierbei erfolgt die Regelung der Spannung V des Formierungsprozesses derart, dass die Abweichung zwischen der erfassten aktuellen Ausdehnung *D(V)* und der Soll-Ausdehnung *D*₀(*V*) verringert wird. Als Abweichung wird insbesondere der Betrag der Regeldifferenz *D*₀(*V*) - *D(V)* verwendet. Die Stellgröße der Regelung ist somit die aktuelle an der Batteriezelle anliegende Spannung. Die Regelgröße der Regelung ist die erfasste aktuelle Ausdehnung *D(V)* der Batteriezelle. Die Führungsgröße der Regelung ist die Soll-Ausdehnung *D*₀(*V*).

Gemäß dem Verfahren erfolgt somit die Regelung des Formierungsprozesses und somit der Ausbildung der SEI der Batteriezelle mittels der spannungsabhängigen Ausdehnung der Batteriezelle. Weitere Prozessgrößen, beispielsweise Stromstärken, Spannungen, Widerstände und/oder Temperaturen, können zusätzlich bei der Regelung berücksichtigt werden.

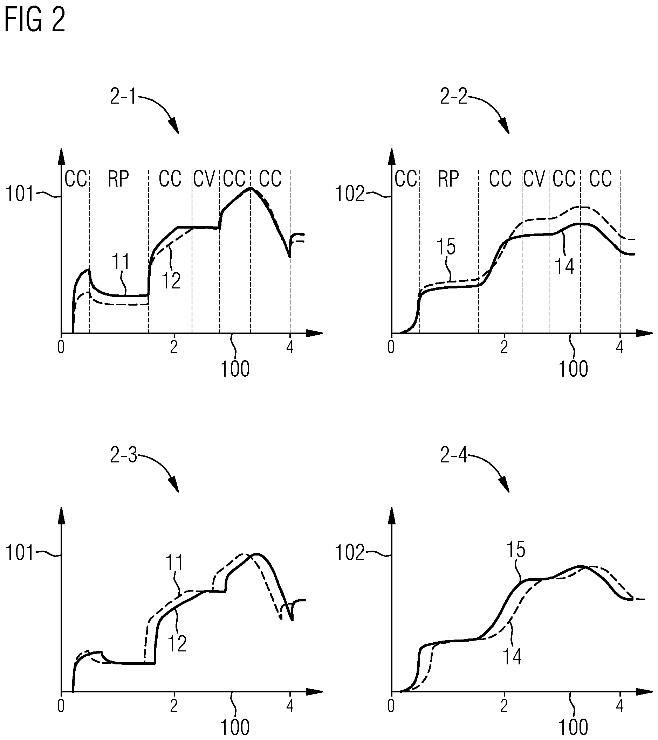

Die Figur 2 zeigt einen exemplarischen Spannungsverlauf 11, 12 und einen Ausdehnungsverlauf 13, 14 eines Golden Samples 12, 15 und einer weiteren Batteriezelle 11, 14 während eines jeweiligen Formierungsprozesses. Hierzu umfasst die Figur 2 vier Diagramme 2-1, 2-2, 2-3, 2-4.

In den Diagrammen 2-1 und 2-2 erfolgt keine ausdehnungsbasierte Regelung. In den Diagrammen 2-3 und 2-4 ist zum Vergleich eine ausdehnungsbasierte Regelung gemäß einer Ausgestaltung der Erfindung dargestellt.

Die Diagramme 2-1, 2-3 der Figur 2 zeigen die Abhängigkeit der jeweiligen Spannung (Ordinate 101) mit der Zeit (Abszisse 100). An der Abszisse 100 ist die Zeit, beispielsweise in Stunden oder in Tagen, aufgetragen. Typischerweise beträgt der industrielle Formierungsprozess 5 bis 20 Stunden. An der Ordinate 102 ist die Spannung in beliebigen Einheiten aufgetragen.

Die Diagramme 2-2, 2-4 der Figur 2 zeigen die Abhängigkeit der jeweiligen Ausdehnung (Ordinate 102) mit der Zeit (Abszisse 100). An der Abszisse 100 ist die Zeit, beispielsweise in Stunden oder in Tagen, aufgetragen. An der Ordinate 102 ist die Ausdehnung in beliebigen Einheiten aufgetragen.

Der Formierungsprozess weist mehrere Phasen auf, in denen entweder die Spannung (CV) oder die Stromstärke (CC) konstant ist oder keine Spannung anliegt (Ruhephasen; RP).

Für jede Zelle wird zusätzlich zur Spannung die jeweilige Ausdehnung während der Formierung erfasst beziehungsweise gemessen. Hierbei wird der Formierungsprozess zunächst gleich zum Formierungsprozess der Referenzzelle (Golden Sample) gestartet. Werden im weiteren Verlauf ebenfalls dieselben Werte für die Prozessgrößen, wie Spannung und Stromstärke, verwendet (siehe Diagramm 2-1), so kann dies dennoch zu verschiedenen Ausdehnungen führen (siehe Diagramm 2-2).

Beispielsweise tritt in der ersten Phase bei Ladung mit einem konstanten Strom (CC) eine höhere Überspannung im Vergleich zum Golden Sample auf. Dies kann dazu führen, dass mehr Strom zur Aufladung der Zelle verwendet wird und weniger Strom in die SEI Formierung fließt, was wiederum zu einem höheren Spannungswert am Ende der folgenden Ruhestufe beziehungsweise Ruhephase (RP) führt. Da weniger SEI gebildet wurde, liegt die Ausdehnung der Zelle am Ende der Ruhestufe RP somit unterhalb der des Golden Samples (siehe Diagramm 2-2).

Während der folgenden Phasen mit konstantem Strom (CC) beziehungsweise mit konstanter Spannung (CV) führt dies dazu, dass sich die SEI nicht im gleichen Maße weiterbildet, wie beim Golden Sample. Dadurch unterscheiden sich die Zellen bezüglich ihrer Ausdehnung und der Beschaffenheit ihrer SEI am Ende des Formierungsprozesses voneinander (siehe Diagramm 2-2).

Würden jedoch die Spannung beziehungsweise der Formierungsprozess gemäß der Erfindung und/oder einer ihrer Ausgestaltungen geregelt werden, so wären zwar die Spannungsverläufe 11, 12 ebenfalls unterschiedlich, aber am Ende des Formierungsprozesses würden im Wesentlichen gleiche Ausdehnungen und somit vergleichbare SEI vorliegen. Dies ist in den Diagrammen 2-3 sowie 2-4 dargestellt. Das Diagramm 2-3 entspricht dem Diagramm 2-1 allerdings nun mit einer ausdehnungsbasierten Regelung der Spannung. Analog entspricht das Diagramm 2-4 dem Diagramm 2-2 ebenfalls nun für die ausdehnungsbasierte Regelung der Spannung.

Hierbei ist zu beachten, dass ebenfalls die zeitlichen Ausdehnungsverläufe 14, 15 im Diagramm 2-4 bei einer ausdehnungsbasierten Regelung verschieden sein können, da nicht gemäß D(t) sondern gemäß *D(V)* geregelt wird. Dennoch führt die Regelung nach *D(V)* am Ende des Formierungsprozesses zu einer im Wesentlichen gleichen Ausdehnung und somit einer im Wesentlichen gleichen SEI.

Falls es der ursprüngliche Prozess des Golden Samples beispielsweise vorsieht, bestimmte Spannungswerte (V) für eine definierte Dauer oder bis zu einer definierten Stromstärke zu halten (CV), so kann die Spannung entsprechend so lange gehalten werden, bis die jeweils zu erwartende Ausdehnung am Ende dieser Haltestufen erreicht wurde. Während vorgesehener Ruhephasen (RP) kann wie bisher eine bestimmte Zeit abgewartet werden, oder es wird ebenfalls bis zum Erreichen des am Golden Samples gemessenen Ausdehnungswerts gewartet. Die zeitlichen Spannungs- und Ausdehnungsverläufe, die sich aus dieser Regelung ergeben, sind in den Diagrammen 2-3 beziehungsweise 2-4 beispielhaft dargestellt.

Mit anderen Worten ergibt sich als Konsequenz einer Regelung gemäß einer Ausgestaltung der Erfindung die gleiche Ausdehnung der Zelle und damit die gleiche Dicke der SEI am Ende der Formierung wie im Falle des Golden Samples (Referenzzelle). Da zudem die gebildeten SEI-Dicken bei jeder Spannung gleich waren, kann zudem davon ausgegangen werden, dass auch die Beschaffenheit der SEI möglichst der des Golden Samples entspricht.

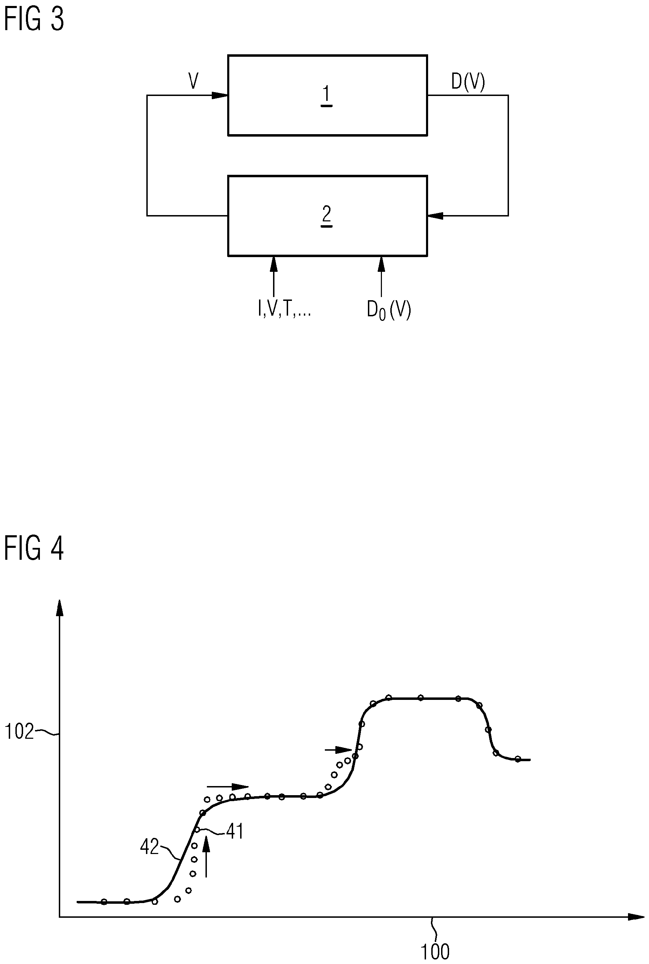

Die Figur 3 zeigt ein Diagramm bezüglich des Regelkreises des Regelverfahrens gemäß einer Ausgestaltung der Erfindung.

Hierbei wird die Spannung einer Batteriezelle 1 während ihres Formierungsprozesses mittels einer Vorrichtung beziehungsweise einer Regeleinheit 2 der Vorrichtung geregelt.

Als Regelgröße *D(V)* wird die Ausdehnung der Batteriezelle 1 verwendet. Als Führungsgröße wird eine Soll-Ausdehnung *D*₀(*V*) der Batteriezelle 1 verwendet. Die Stellgröße der Regelung ist die an der Batteriezelle 1 angelegte Spannung V. Die Regelung kann weitere Regelgrößen beziehungsweise Prozessgrößen, wie beispielsweise Spannungen V, Stromstärken *I* und/oder Temperaturen *T,* berücksichtigen. Als Regeldifferenz der Regelung wird bevorzugt *D*₀(*V*) *- D(V)* verwendet.

Mit anderen Worten umfasst der dargestellte Regelkreis die Batteriezelle 1 (Regelstrecke), an die eine Spannung V angelegt wird. Dies führt zu einer mit der Spannung assoziierten aktuellen Ausdehnung *D(V).* Die Regeleinheit 2 beziehungsweise der Regler 2 vergleicht *D(V)* mit dem entsprechenden Wert *D*₀(*V*) aus der Ausdehnungs-Sollwertkurve der Golden-Sample-Messung (Referenzmessung).

Die Figur 4 zeigt eine Soll-Ausdehnung sowie einen aktuellen Ausdehnungsverlauf einer Batteriezelle.

An der Abszisse 100 des Diagramms ist die Spannung in beliebigen Einheiten aufgetragen.

An der Ordinate 102 des Diagramms ist die Ausdehnung der Batteriezelle in beliebigen Einheiten aufgetragen.

Die Kurve 42 entspricht der spannungsabhängigen Soll-Ausdehnung beziehungsweise dem spannungsabhängigen Soll-Ausdehnungsverlauf. Diese kann beispielsweise durch Messung und Interpolation mittels einer Referenzzelle (Golden Sample) ermittelt werden. Die Punkte 41 zeigen die ebenfalls spannungsabhängige erfasste beziehungsweise die gemessene Ausdehnung der Batteriezelle, das heißt die Messwerte der Ausdehnung der Batteriezelle während ihres Formierungsprozesses.

Weichen nun die Messwerte 41 von der Soll-Ausdehnung 42 ab, so wird der Spannungsverlauf derart geregelt, dass die Abweichung verringert wird. Die Rate der Spannungsänderung wird beispielsweise verringert, wenn die Ausdehnung langsamer als erwartet erfolgt (Pfeil nach oben) oder erhöht, sofern die Ausdehnung stärker zunimmt als erwartet (Pfeile nach rechts).

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 2-1: Diagramm
- 2-2: Diagramm
- 2-3: Diagramm
- 2-4: Diagramm

- S1: erster Schritt
- S2: zweiter Schritt
- S3: dritter Schritt

- 1: Batteriezelle
- 2: Regeleinheit
- 11: Spannungsverlauf
- 12: Spannungsverlauf
- 14: Ausdehnungsverlauf
- 15: Ausdehnungsverlauf
- 42: Soll-Ausdehnung
- 41: Ist-Ausdehnung
- 100: Abszisse
- 101: Ordinate
- 102: Ordinate

## Patentansprüche

1. Verfahren zur Regelung eines Formierungsprozesses einer Batteriezelle (1), bei dem an die Batteriezelle (1) eine zeitabhängige Spannung V angelegt wird, **gekennzeichnet durch** folgende Schritte:
- (S1) Bereitstellen einer spannungsabhängigen Soll-Ausdehnung *D*₀(*V*) (42);
- (S2) Erfassen einer aktuellen Ausdehnung *D(V)* (41) der Batteriezelle (1); und
- (S3) Regeln der Spannung V des Formierungsprozesses derart, dass die Abweichung zwischen der erfassten aktuellen Ausdehnung *D(V)* (41) und der Soll-Ausdehnung *D*₀(*V*) (42) verringert wird.

2. Verfahren gemäß Anspruch 1, **gekennzeichnet dadurch, dass** für das Regeln der Spannung *V* die Regeldifferenz *D*₀(*V*) - *D(V)* verwendet wird.

3. Verfahren gemäß Anspruch 1 oder 2, **gekennzeichnet dadurch, dass** für eine Stromstärke ein zeitabhängiger Sollwert *I*₀ bereitgestellt wird, eine aktuelle Stromstärke *I* erfasst wird, und für das Regeln die Regeldifferenz *g*₁[*D*₀(*V*) - *D*(*V*)] + *g*₂(*I*₀ - *I*) verwendet wird, wobei *g*₁,*g*₂ Gewichtungsfaktoren sind.

4. Verfahren gemäß einem der vorhergehenden Ansprüche, **gekennzeichnet dadurch, dass** weiterhin eine Temperaturabhängigkeit der Ausdehnung berücksichtigt wird.

5. Verfahren gemäß einem der vorhergehenden Ansprüche, **gekennzeichnet dadurch, dass** als Ausdehnung eine Änderung einer Höhe, Breite und/oder Länge der Batteriezelle (1) und/oder eines Volumens der Batteriezelle (1) verwendet wird.

6. Verfahren gemäß einem der vorhergehenden Ansprüche, **gekennzeichnet dadurch, dass** die aktuelle Ausdehnung *D(V)* (41) mittels eines Dilatometers, einer Kraftmessung, einer Druckmessung und/oder mittels eines Dehnungsmessstreifens erfasst wird.

7. Verfahren gemäß einem der vorhergehenden Ansprüche, **gekennzeichnet dadurch, dass** die Batteriezelle (1) als Lithium-Ionen-Batteriezelle ausgebildet ist.

8. Herstellungsverfahren einer Batteriezelle (1), bei dem ein Formierungsprozess der Batteriezelle (1) erfolgt, **gekennzeichnet dadurch, dass** der Formierungsprozess mittels eines Verfahrens gemäß einem der vorhergehenden Ansprüche durchgeführt wird.

9. Vorrichtung zur Regelung eines Formierungsprozesses einer Batteriezelle (1), **dadurch gekennzeichnet, dass** die Vorrichtung wenigstens eine Regeleinheit (2) umfasst, wobei die Regeleinheit (2) dazu ausgebildet ist, ein Verfahren gemäß einem der Ansprüche 1 bis 7 durchzuführen.
